# EUROPEAN PATENT APPLICATION

(11) **EP 4 700 668 A1**
(43) Date of publication of application: **25.02.2026**
(21) Application number: 25195903.7
(22) Date of filing: 14.08.2025
(51) Int. Cl.: G06Q 10/00, G06Q 50/10

(54) **INFORMATION PROCESSING APPARATUS, INFORMATION PROCESSING SYSTEM, INFORMATION PROCESSING METHOD, AND PROGRAM**

(30) Priority: 20.08.2024 JP 2024139239
(71) Applicant: Canon Kabushiki Kaisha, Tokyo, 146-8501 (JP)
(72) Inventor: TSUTSUMI, Tadaomi, Tokyo 146-8501 (JP)
(74) Representative: TBK

(57) **Abstract**

An information processing apparatus includes: an obtaining unit (302) which obtains list information of an application for which a user has registered; and a display unit (303) which displays a content indicating the list information as support information for supporting user registration of a new application for which the user has not registered.

## Description

### TECHNICAL FIELD

The present disclosure relates to registration of accounts for various services.

### BACKGROUND

In recent years, among services provided on the Internet, there have been services the uses of which are started after an account of a user is registered. In addition, there is also a case where an account of a user who has registered for another service is used for using a certain service by causing such services to cooperate with each other. For example, the system of Japanese Patent Laid-Open No. 2019-139457 (hereinafter, referred to as Document 1) inquires whether it is possible to use an account of a user of an application cooperated with a certain service at the time of logging in the service.

### SUMMARY

The system described in Document 1 logs in the service by using an account of a user of an application which has been logged in. Although the login to a service is supported by such processing, registration of an account of a user for a new application for which the account of the user has not been registered is not supported. For this reason, in a case where the number of steps of user registration increases, the user sometimes leaves in the middle of a user registration work.

The present disclosure in its first aspect provides an information processing apparatus as specified in claim 1. Optional features are specified in claims 2 to 11.

The present disclosure in its second aspect provides an information processing system as specified in claim 12.

The present disclosure in its third aspect provides an information processing method as specified in claim 13.

The present disclosure in its fourth aspect provides a program as specified in claim 14.

The present disclosure makes it possible to reduce cases where a user during a registration work leaves in the middle of the registration work.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram showing an example of an entire configuration of an information processing system of Embodiment 1;
Fig. 2 is a diagram showing an example of a hardware configuration of an information processing apparatus included in the information processing system of Fig. 1;
Fig. 3A is a diagram showing an example of software to be executed in the information processing apparatus;
Fig. 3B is a diagram showing an example of a hierarchy configuration of the software to be executed in the information processing apparatus;
Fig. 4 is a diagram showing an example of data in which app IDs and app names are associated with each other;
Fig. 5 is a diagram showing an example of a user registration screen in an application of Figs. 3A and 3B;
Fig. 6 is a flowchart for explaining an example of processing to display a cooperation application;
Fig. 7 is a diagram showing an example of a result of processing of S604 in Fig. 6;
Fig. 8A is a diagram showing a use case in which a usage history is associated with a used app name;
Fig. 8B is a diagram showing a use case in which all apps were used;
Fig. 9 is a diagram showing an example of a user registration screen in Embodiment 3;
Fig. 10A is a diagram showing an example of software to be executed in an information processing apparatus; and
Fig. 10B is a diagram showing an example of a hierarchy configuration of the software to be executed in the information processing apparatus.

### DESCRIPTION OF THE EMBODIMENTS

Hereinafter, preferred embodiments of the present invention will be described in detail with reference to the attached drawings. Note that the following embodiments are not intended to limit the matters of the present disclosure, and all the combinations of features described in the following embodiments are not necessarily essential for the solution of the present disclosure. Note that the same constituent element is denoted by the same reference sign.

### (Overview)

In recent years, in order to use a service provided on the Internet, user registration is conducted to generate an account of the user. Services provided on the Internet include, for example, web services, and social network services. In the case where these services are used in devices such as smartphones by users, services are installed in the devices as applications to be used by the users. In addition, in the case of conducting user registration after installing a service in a device as an application, the service to be used for registration is selected from a list of social network services and various web services on the screen. In the case where a service which has not been used on the device is selected at the time of such a registration flow, a login request or new registration to the social network service is required. Moreover, there is also a case where it is necessary to install an application for a social network service. There is also a case where as such a registration flow increases, the user leaves in the middle of the registration flow. In view of those cases, there is a technique for supporting cooperation between a social network service and login. In such a technique, information that login cooperation was conducted before is presented to the user; however, user registration is not supported. For this reason, in the case where the registration flow increases, the user could leave in the middle of the registration. In view of this, in the present disclosure, list information of user-registered applications is obtained, and a content indicating the list information is displayed as support information for supporting user registration of a user-unregistered new application. According to such processing, the user is allowed to select an application which is to be caused to cooperate from user-registered applications, and thus, the number of steps of a user registration flow can be reduced. Hence, it becomes possible to reduce cases where the user during a registration work leaves in the middle of the registration. Here, the user-registered means that information specifying the user has been registered. In addition, the user-unregistered means that information specifying the user has not been registered.

### (Embodiment 1)

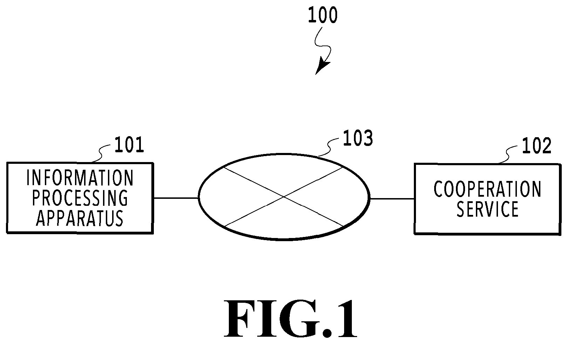

Fig. 1 is a diagram showing an example of an entire configuration of an information processing system 100 in Embodiment 1. The information processing system 100 includes an information processing apparatus 101 and a cooperation service 102. The information processing apparatus 101 and the cooperation service 102 are connected via a network 103. The network 103 provides a communication path between nodes such as the information processing apparatus 101 and the cooperation service 102, and is capable of transmitting and receiving various data. The network 103 may be configured with a local area network such as a wired LAN or a wireless LAN, for example. Alternatively, the network 103 may be configured with a world-wide information communication network such as the Internet. Alternatively, the network 103 may be configured with a cellular phone network with 5G or 6G. Alternatively, the network 103 may be configured with a cable television network. Alternatively, the network 103 may be configured with a satellite communication network. Alternatively, the network 103 may be configured with a combination of various communication networks such as a local area network, a world-wide information communication network, a cellular phone network, a cable television network, and a satellite communication network.

The information processing apparatus 101 has a function of communicating various data with communication nodes via the network 103, and a function capable of installing and executing an application. The information processing apparatus 101 is configured with a personal computer, for example. The information processing apparatus 101 may be configured with a smartphone. The installation of an application may be executed in accordance with an instruction of a user of a personal computer, a smartphone, or the like. The information processing apparatus 101 may have a function of automatically updating an application. The information processing apparatus 101 may have a function of automatically updating an application only when the information processing apparatus 101 is connected to a wireless LAN. The cooperation service 102 has a function of providing various services via the network 103. The cooperation service 102 has a function of executing processing corresponding to a request, for example, in the case where an application installed in the information processing apparatus 101 requested for information on the application via the network 103. The cooperation service 102 is achieved as a cloud service with which a plurality of servers, which are not shown, are allowed to cooperate with one another. The cooperation service 102 provides a social network service to the information processing apparatus 101 via the network 103, for example.

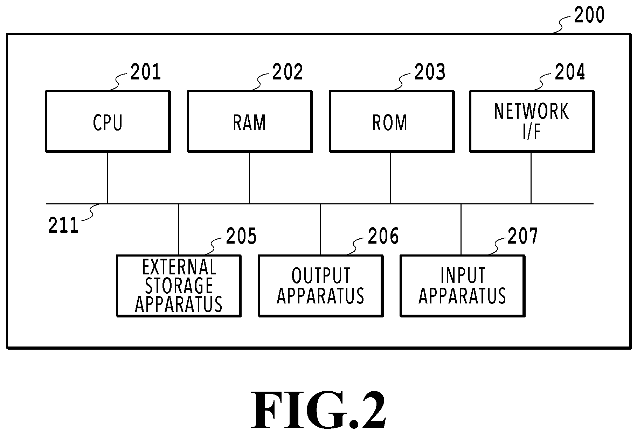

Next, an example of a hardware configuration of the information processing apparatus 101 included in the information processing system 100 according to the present embodiment will be described by using Fig. 2. Fig. 2 is a diagram showing an example of the hardware configuration of the information processing apparatus 101 included in the information processing system 100 of Fig. 1. The information processing apparatus 101 includes a circuit board 200. The circuit board 200 includes a CPU 201, a RAM 202, a ROM 203, a network interface 204, an external storage apparatus 205, an output apparatus 206, and an input apparatus 207. The CPU 201 conducts an operation control of each unit included in the information processing apparatus 101, and serves as a main body which executes various types of processing which will be described later as conducted by the information processing apparatus 101. The RAM 202 is a memory which temporarily stores data and control information, and is a work area used by the CPU 201 to execute various types of processing. The ROM 203 stores fixed operation set values, operation programs, and the like of the information processing apparatus 101. The network interface 204 provides a function for connecting to and communicating with the network 103. The information processing apparatus 101 can communicate data with an external apparatus through the network interface 204. The external storage apparatus 205 is an apparatus which stores data. As the external storage apparatus 205, for example, a hard disk drive (HDD), a solid-state drive (SSD), an optical disk drive, a semiconductor storage apparatus, or another storage apparatus may be used. The external storage apparatus 205 stores computer programs for causing the CPU 201 to execute various types of processing, which will be described later as conducted by the information processing apparatus 101, and data. The output apparatus 206 is configured with an LCD (Liquid Crystal Display), for example. The output apparatus 206 displays information and the like which were processed in the information processing apparatus 101. The input apparatus 207 is, for example, a keyboard, a mouse, a touch panel, or the like, and receives necessary inputs from the user.

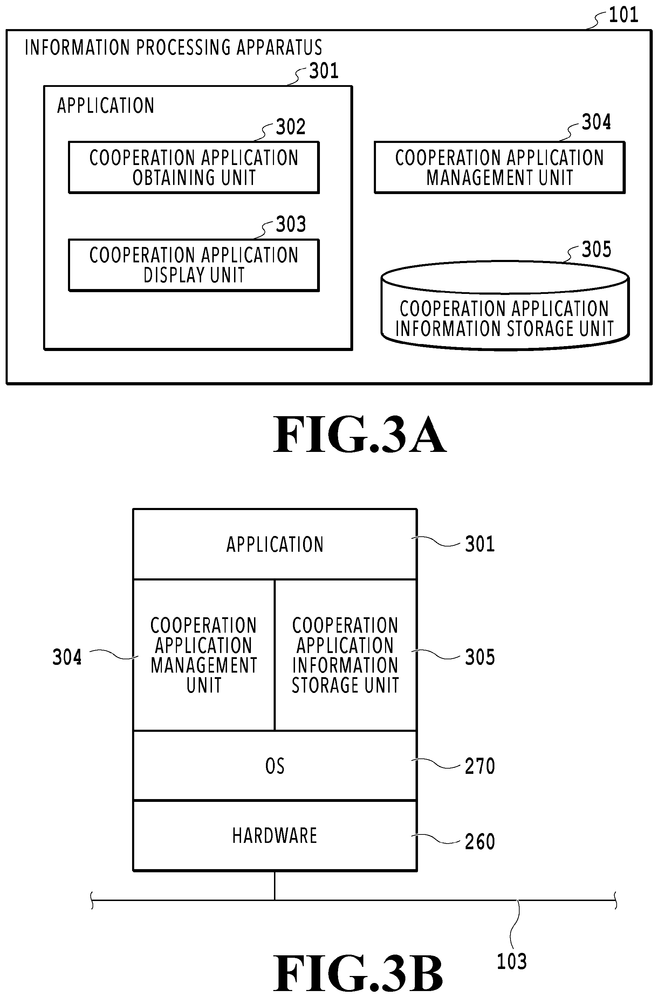

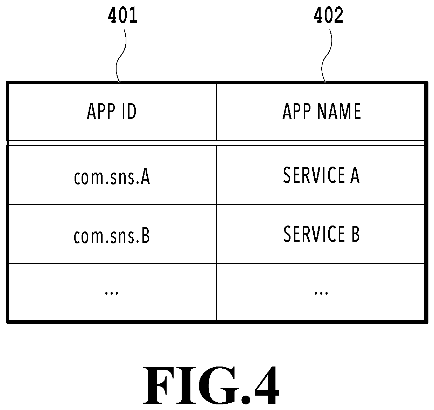

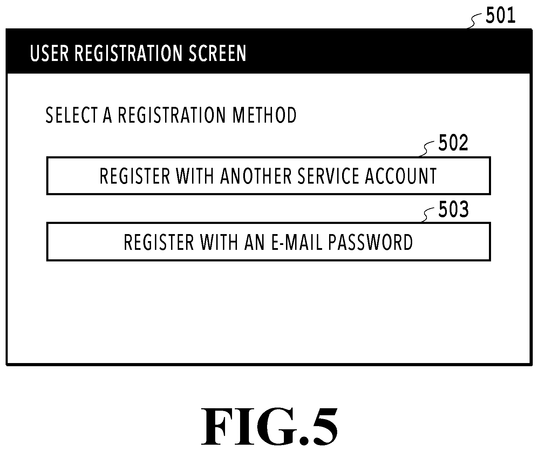

Next, an example of a functional configuration of the information processing apparatus 101 according to the present embodiment will be described by using Fig. 3A and Fig. 3B. Fig. 3A is a diagram showing an example of software to be executed in the information processing apparatus 101. Fig. 3B is a diagram showing an example of a hierarchy configuration of the software to be executed in the information processing apparatus 101. The information processing apparatus 101 includes an application 301, a cooperation application management unit 304, and a cooperation application information storage unit 305 as the functional configuration. The application 301 includes a cooperation application obtaining unit 302 and a cooperation application display unit 303. That is, the cooperation application obtaining unit 302 and the cooperation application display unit 303 are configured in the application 301. The application 301, for example, has been installed, and has been in the state where user registration has not been made. In view of this, when the application 301 has received a user registration request from the user, the cooperation application obtaining unit 302 obtains cooperation application information from the cooperation application management unit 304. The cooperation application information is stored in the cooperation application information storage unit 305, for example. The cooperation application information will be described later by using Fig. 4. The cooperation application management unit 304 obtains the cooperation application information installed in the information processing apparatus 101 from the cooperation application information storage unit 305. That is, the cooperation application management unit 304 manages a storage location of list information of user-registered applications among a plurality of applications including the user-registered applications and user-unregistered applications. The cooperation application management unit 304 has a function of requesting the operating system to release a hardware resource allocated to display in the case where the display has ended. The cooperation application management unit 304 and the cooperation application information storage unit 305 are configured between the application 301 and an OS 270. In a layer below the OS 270, hardware 260 is configured. The hardware 260 includes a circuit board 200. The hardware 260 and the network 103 are connected, and various communications via the network 103 are executed as appropriate. In addition, in response to various requests from the application 301, the cooperation application management unit 304 and the cooperation application information storage unit 305 communicate various pieces of information with the OS 270 to operate the hardware 260. For example, the cooperation application display unit 303 displays a list of cooperation applications on the output apparatus 206 based on cooperation application information obtained by the cooperation application obtaining unit 302. An example of the cooperation application information stored in the cooperation application information storage unit 305 is shown in Fig. 4. Fig. 4 is a diagram showing an example of data in which app IDs and app names are associated with each other. As shown in Fig. 4, the cooperation application information is a list composed of an app ID 401 and an app name 402. Fig. 4 shows an example in which the list of cooperation application information is displayed in a table. The app ID 401 is ID uniquely identifying a cooperation application. The app ID 401 may be, for example, a package name of an application. The app name 402 is the name of a cooperation application. The app name 402 is displayed on the output apparatus 206 by the processing by the cooperation application display unit 303. The cooperation application information of Fig. 4 is stored in the cooperation application information storage unit 305 as appropriate in the case where the information processing apparatus 101 has used services supplied from the cooperation service 102 via the network 103. In addition, the OS 270 manages various logs such as an operation log, a communication log, and an authentication log as appropriate. The operation log has an operation history of the information processing apparatus 101 and an access history to the cooperation service 102. The communication log has a communication history between the information processing apparatus 101 and the cooperation service 102. The authentication log has a history of login from the information processing apparatus 101 to services provided by the cooperation service 102. Hence, the application 301 can request the OS 270 for contents relating to the cooperation application information of Fig. 4 among various logs of the OS 270 as appropriate. The user registration by the application 301 will be described by using Fig. 5.

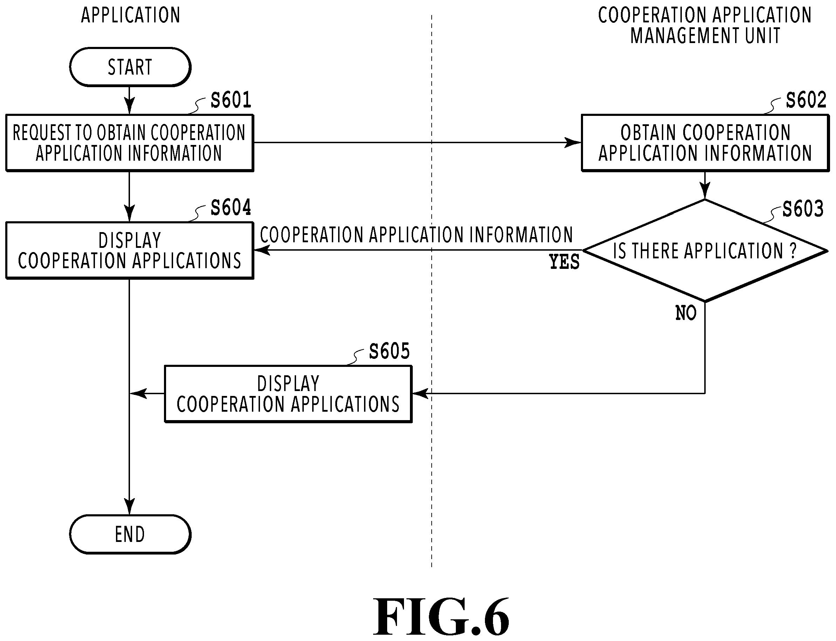

Fig. 5 is a diagram showing an example of a user registration screen in the application 301 of Figs. 3A and 3B. As shown in Fig. 5, a band-shaped portion in an upper portion of an app window 501 shows a title bar. In this title bar, a character string "USER REGISTRATION SCREEN" is displayed. In the middle of the app window 501, a button 502 and a button 503 are disposed as two rectangular UI elements. On the button 502, a character string "REGISTER WITH ANOTHER SERVICE ACCOUNT" is displayed. In the case where the button 502 is operated by the user, for example, a modal window in which a list of accounts of user-registered services are shown, and these listed accounts can be selected is displayed. On the other hand, on the button 503, a character string "REGISTER WITH AN E-MAIL PASSWORD" is displayed. In the case where the button 503 is operated by the user, for example, a modal window which contains entry fields for an E-mail address and an E-mail password are displayed. In this case, the modal window contains a text field for entering an E-mail address and a password field for entering an E-mail password. Specifically, in the case where the user presses the button 502, the cooperation application obtaining unit 302 requests the cooperation application management unit 304 to obtain cooperation application information. More specific processing as the information processing system 100 will be described by using Fig. 6.

### (Processing of Information Processing System 100)

Fig. 6 is a flowchart for explaining an example of the processing to display a cooperation application. In Fig. 6, various pieces of information are transferred between the application 301 and the cooperation application management unit 304. The processing shown in Fig. 6 is executed, for example, at the timing when the user has operated the button 502 of Fig. 5 on the input apparatus 207. Note that some or all functions among steps in Fig. 6 may be achieved by hardware such as ASIC or an electronic circuit. The sign "S" in the description of each processing means a step in the flowchart.

In addition, in Fig. 6, each processing of S601, S604, and S605 is executed by the application 301. Each processing of S602 and S603 is executed by the cooperation application management unit 304. The control main body for each of the application 301 and the cooperation application management unit 304 is the CPU 201.

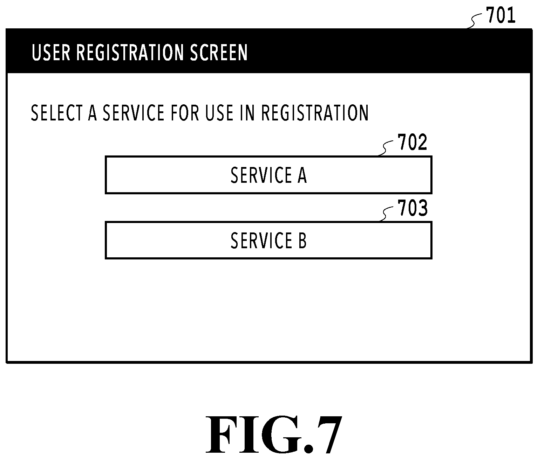

A use case is assumed in which the user operates the app window 501 displayed on the output apparatus 206 and selects the button 502 on which the character string "REGISTER WITH ANOTHER SERVICE ACCOUNT" is displayed. In S601, the application 301 requests the cooperation application management unit 304 to obtain cooperation application information. In S602, upon receipt of the request to obtain cooperation application information, the cooperation application management unit 304 obtains a list of cooperation applications installed in the information processing apparatus 101 from the cooperation application information storage unit 305. In S603, if there is a cooperation application (S603; YES), the cooperation application management unit 304 return the obtained cooperation application information to the application 301. In S604, the application 301 causes the cooperation application display unit 303 to display the list of cooperation applications based on the cooperation application information returned from the cooperation application management unit 304, and ends the processing. An example of cooperation applications displayed by the cooperation application display unit 303 is shown in Fig. 7. Fig. 7 is a diagram showing an example of a result of the processing of S604 in Fig. 6. Fig. 7 shows an example of a user registration screen in the application 301 of Figs. 3A and 3B after the result of the processing of S604 in Fig. 6. As shown in Fig. 7, a band-shaped portion in an upper portion of an app window 701 shows a title bar. In this title bar, a character string "USER REGISTRATION SCREEN" is displayed. In the middle of the app window 701, a button 702 and a button 703 are disposed as two rectangular UI elements. On the button 702, a character string "SERVICE A" is displayed. In the case where the button 702 is operated, detailed information of "SERVICE A" may be displayed. On the other hand, on the button 703, a character string "SERVICE B" is displayed. In the case where the button 703 is operated, detailed information of "SERVICE B" may be displayed. That is, "SERVICE A" and "SERVICE B" are included as cooperation applications installed in the information processing apparatus 101. Each of "SERVICE A" and "SERVICE B" is registration information which specifies a user-registered application. In contrast, in S603, if there is no cooperation application (S603; NO), the cooperation application management unit 304 executes the following processing. Specifically, the cooperation application management unit 304 returns default cooperation destination information to the application 301 as list information of all applications with which the application 301 can cooperate. In S605, the application 301 causes the cooperation application display unit 303 to display a list of default cooperation destinations based on the default cooperation destination information returned from the cooperation application management unit 304, and ends the processing. For example, the application 301 displays logos of Google (registered trademark), Facebook (registered trademark), and the like as the default cooperation destination information. In addition, the application 301 has associated these logos with user-registered accounts, and data is configured to be capable of cooperating with the account in the case where any of these logos is selected.

### (Effect)

The system described in Document 1 logs in the service by using an account of a user of an application which has been logged in. Such processing supports the login to the service, but does not support registration of an account of a user for a new application for which the account of the user has not been registered. Hence, there is a case where as the number of steps of the user registration increases, the user leaves in the middle of user registration work. In view of this, in the system according to the present embodiment, it becomes possible to select a cooperation application as support information for supporting the user registration of a user-unregistered application. For this reason, the number of user registration processing steps can be reduced. The reduction in the number of registration processing steps makes it possible to reduce cases where a user leaves at the time of registration. Specifically, registration information indicating a user-registered application among a plurality of applications is obtained, and the obtained registration information is displayed as support information for supporting the user registration of a user-unregistered application. This processing makes it possible to reduce cases where a user during a registration work leaves in the middle of the registration work.

In addition, in the case where a plurality of services which can be provided via a network as services which can be provided by user-registered applications, a list of the plurality of services may be displayed as support information. This processing enables a user to select a service to use for a user registration from among a plurality of services, and thus makes it possible to increase a variation of user registrations.

### <Embodiment 2>

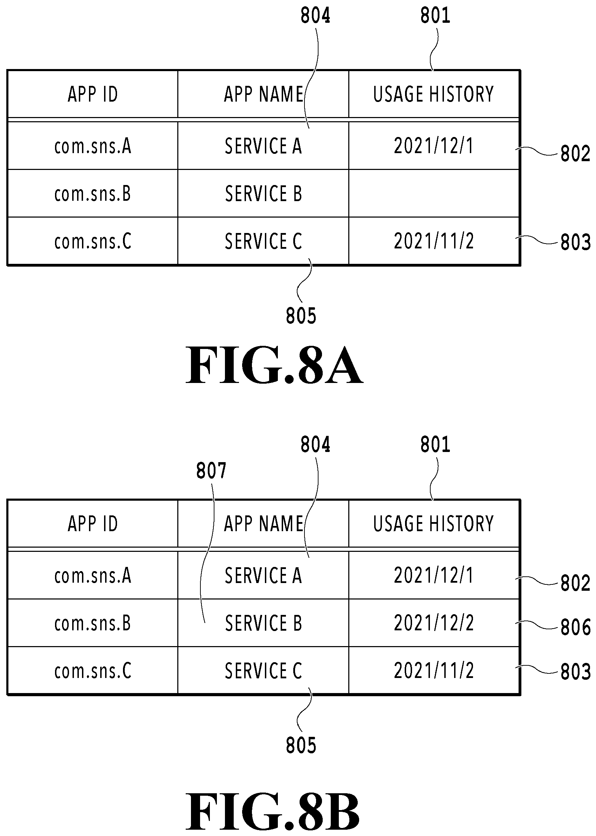

In the present embodiment, a use case in which a usage history 801 of an application is managed in the cooperation application information storage unit 305 will be described by using Fig. 8A and Fig. 8B. Fig. 8A is a diagram showing a use case in which a usage history is associated with a used app name. Fig. 8B is a diagram showing a use case in which all the apps were used. In the use case of Fig. 8A, for each used application, the app ID, the app name, and the usage history of the application are associated and recorded. That is, the usage history is further associated with the app ID and the app name which are associated in Fig. 4. In addition, the respective usage histories are recorded in a field 802 and a field 803. Hence, information displayed in the cooperation application display unit 303 is information corresponding to the field 802 and the field 803. Specifically, a field 804 corresponds to the field 802. In the field 804, "SERVICE A" is recorded as the app name used in the usage date shown in the field 802. On the other hand, a field 805 corresponds to the field 803. In the field 805, "SERVICE C" is recorded as the app name used in the usage date shown in the field 803. In addition, in the use case of Fig. 8B, for each of all the applications, the app ID, the app name, and the usage history of the application are associated and recorded.

### (Processing and Effect of Information Processing System 100)

From the above description, among a plurality of services which can be provided via a network as services which can be provided by user-registered applications, services for which the usage histories have been recorded may be displayed. This processing enables a user to select a service to use for a user registration by referring to usage histories, and thus makes it possible to increase a variation of user registration.

### <Embodiment 3>

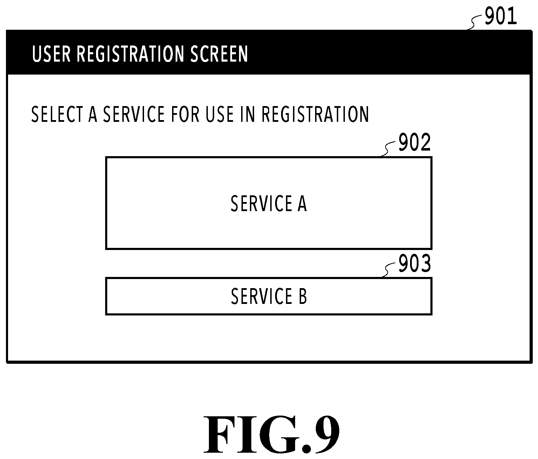

In the present embodiment, a use case in which display is changed in accordance with a usage history will be described. In Fig. 8A, in the usage history of the field 802, the latest usage history as compare with the usage history in the field 803 is recorded. Here, the fact that the usage history is the latest usage history may be highlighted. In the example of Fig. 8A, the usage history of "SERVICE A" is the latest usage history as compare with the usage history of "SERVICE C". In this case, since the usage period of "SERVICE A" is the most recent usage period as compared with the usage period of "SERVICE C", this fact may be reflected in the user registration screen. For example, the button of "SERVICE A" may be displayed in a blinked manner while the button of "SERVICE C" is displayed in a lighted manner. That is, a service having the most recent usage period may be highlighted. In addition, in Fig. 8B, the usage history of "SERVICE A" is an earlier usage history in date than the usage history of the "SERVICE B" in the same month. As shown in Fig. 9, the fact that the usage is a usage of the earliest date in the same month may be reflected in the user registration screen in this way. Fig. 9 is a diagram showing an example of a user registration screen in Embodiment 3. A band-shaped portion in an upper portion of an app window 901 in Fig. 9 shows a title bar. In this title bar, a character string "USER REGISTRATION SCREEN" is displayed. In the middle of the app window 901, a button 902 and a button 903 are disposed as two rectangular UI elements. On the button 902, a character string "SERVICE A" is displayed. In the case where the button 902 is operated, detailed information of "SERVICE A" may be displayed. On the other hand, on the button 903, a character string "SERVICE B" is displayed. In the case where the button 903 is operated, detailed information of "SERVICE B" may be displayed. In the example of Fig. 9, the size of the button 902 indicating "SERVICE A" is larger than the size of the button 903 indicating "SERVICE B". The highlighting may be made by means of such sizes of the buttons.

### (Processing and Effects of Information Processing System 100)

From the above description, among services whose usage histories are recorded, the service having the most recent usage period may be highlighted. This processing makes it possible to conduct user registration with the most recent user registration information. Note that the condition for the highlighting is not limited to the above-described one. For example, among services whose usage histories are recorded, a service having the highest usage frequency may be highlighted. This processing makes it possible to use an account having a high usage frequency for user registration.

### <Embodiment 4>

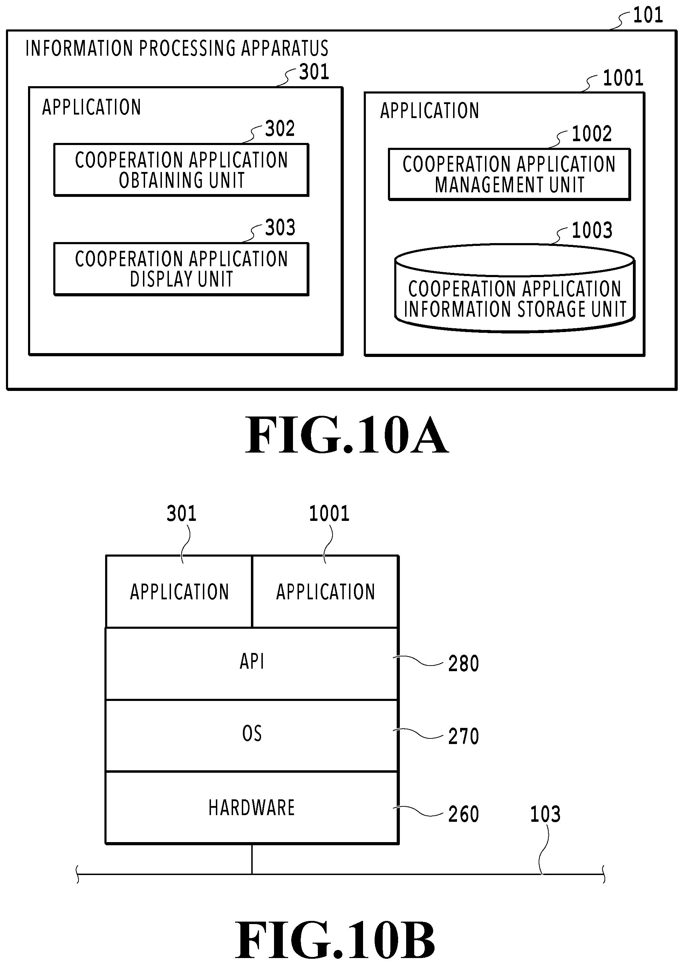

Fig. 10A is a diagram showing an example of software to be executed in the information processing apparatus 101. Fig. 10B is a diagram showing an example of a hierarchy configuration of the software to be executed in the information processing apparatus 101. In the present embodiment, as shown in Figs. 10A and 10B, a cooperation application management unit 1002 and a cooperation application information storage unit 1003 are configured in an application 1001. The application 1001 is a functional configuration which can be installed in the information processing apparatus 101. That is, the cooperation application management unit 1002 and the cooperation application information storage unit 1003 are use cases which are not provided as functions of the information processing apparatus 101.

The application 1001 of Fig. 10A has the same hierarchy configuration as the application 301 as shown in Fig. 10B, and requests various pieces of information obtained by the OS 270 via an API (Application Interface). Hence, an execution environment is given on the application 1001 basis, and cooperation applications are managed. Therefore, it becomes easy to delete used data, and it becomes possible to conduct memory release individually. For example, the cooperation application management unit 1002 manages a storage location of the content indicating the list information and an execution environment for display of the content indicating the list information. The cooperation application management unit 1002 is capable of having a function of releasing a hardware resource allocated to display in a case where the display has ended.

### (Processing and Effect of Information Processing System 100)

From the above description, the application 1001 is implemented in the same functional hierarchy as the application 301, and manages the user-registered application. In addition, in the case where the processing of display by the cooperation application display unit 303 has ended, the application 1001 can release a logical space allocated to the processing of the user-registered application. Therefore, it is possible to efficiently use a logical space.

### <Other Embodiments>

Although various examples and embodiments of the present disclosure have been shown and described above, the gist and scope of the present disclosure are not limited to the specific descriptions of the present Specification. The present disclosure is not limited to the above-mentioned embodiments, and various modifications may be made. In addition, parts of the above-mentioned embodiments of the present disclosure may be combined as appropriate.

### (Modification 1)

Although examples in which the cooperation service 102 provides a social network service to the information processing apparatus 101 via the network 103 have been described, the configuration is not particularly limited to this. The cooperation service 102 may provide a payment service to the information processing apparatus 101 via the network 103. For example, after a user applies for a concert ticket at a certain website, a list of payment services used in the past may be displayed to the user as payment methods. Such processing makes it possible for the user to select a payment service for use in the payment from among the displayed list of payment services and to process the payment. Therefore, it also becomes possible to support a procedure which requires various input works for a user like payments.

### (Modification 2)

In addition, although the use case in which user registration is supported for an application which has been installed and whose user registration has not been made has been described in Embodiments 1 to 4, the configuration is not particularly limited to this use case. For example, a use case is assumed in which although a user registration of an application was made after installation, the installed application has been deleted from the information processing apparatus 101 and only the user registration remains. In this use case, in the case where an application installed again and the application installed at the time of the user registration are the same application but have different versions, the following processing may be executed. Specifically, in the case where the applications which are of different versions but conduct processing for the same purpose are the application whose user registration has been made, information on the application whose user registration has been made may be obtained. This processing makes it possible to support a procedure which requires various input works for a user by displaying an application corresponding to the obtained information as an application which is capable of cooperation of input works by the user.

### (Modification 3)

In addition, although an example in which information on an application whose user registration has been made is obtained for cooperation of input works by a user irrespective of the type of the application has been described in Embodiments 1 to 4, the configuration is not particularly limited to this. For example, a use case is assumed in which an application is a native application which is required to be installed. In the case of this use case, information on the application may be obtained after installation. Such processing makes it possible to cause the information processing apparatus 101 to conduct operations unique to its hardware also via an account whose user registration has been made for another application.

### (Modification 4)

In addition, although an example in which information on an application whose user registration has been made is obtained for cooperation of input works by a user irrespective of the type of the application has been described in Embodiments 1 to 4, the configuration is not particularly limited to this. For example, in the case where an application is a web application which is not required to be installed, the following correspondence is possible. Specifically, since a web application which is not required to be installed is an application which is executed on a web browser, it is possible to use the application by making user registration. Hence, as information required for user registration, only information on an application whose user registration has been made is required. Such processing makes it possible to use a service provided by a web application even via an account whose user registration has been made for another application.

### (Modification 5)

In addition, in Embodiment 1, an example in which the cooperation application information stored in the cooperation application information storage unit 305 is configured with a table as a list of the cooperation application information of Fig. 4. However, the configuration is not particularly limited to this. For example, combinations of app IDs and app names may be configured as a list of cooperation application information with a bullet point list. In addition, in Embodiment 1, an example in which an example of display of cooperation application information is displayed with the buttons 702 and 704 of Fig. 7 has been described. However, the configuration is not particularly limited. For example, cooperation application information may be displayed with a pie chart which further includes usage frequencies as numerical values. Alternatively, cooperation application information may be displayed with a block chart which further includes periods of use, where a more recent usage period is displayed as a larger region. Alternatively, combinations of the app ID 401, the app name 402, the usage frequency, the usage period, and the like may be displayed as cooperation application information by combining at least two of a table, a list, various graphs, and various charts.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

The present disclosure makes it possible to reduce cases where a user during a registration work leaves in the middle of the registration work.

Various embodiments have been described in detail above but it will be understood that the present disclosure is not limited to these embodiments and encompasses all modifications, variants, alternatives and equivalents falling within the scope of the appended claims.

## Claims

1. An information processing apparatus comprising:
an obtaining unit (302) which obtains list information of an application for which a user has registered; and
a display unit (303) which displays a content indicating the list information as support information for supporting user registration of a new application for which the user has not registered.

2. The information processing apparatus according to claim 1, wherein in a case where there are a plurality of services which can be provided via a network as services which can be provided by the registered application, the display unit (303) displays a list of the plurality of services as the content indicating the list information.

3. The information processing apparatus according to claim 2, wherein the display unit (303) displays a service for which a usage history has been recorded among the plurality of services, as the content indicating the list information.

4. The information processing apparatus according to claim 3, wherein the display unit (303) highlights a service having the highest usage frequency among services for each of which the usage history has been recorded, as the content indicating the list information.

5. The information processing apparatus according to claim 3, wherein the display unit (303) highlights a service having the most recent usage period among services for each of which the usage history has been recorded, as the content indicating the list information.

6. The information processing apparatus according to claim 2, further comprising:
a management unit (304) which manages a storage location of the content indicating the list information, wherein
in a case where display by the display unit has ended, the management unit requests an operating system to release a hardware resource allocated to the display.

7. The information processing apparatus according to claim 2, further comprising:
a management unit (1002) which manages a storage location of the content indicating the list information and an execution environment for display of the content indicating the list information, wherein
in a case where display by the display unit has ended, the management unit releases a hardware resource allocated to the display as the execution environment.

8. The information processing apparatus according to claim 2, wherein in a case where the registered application is a payment service, the obtaining unit (302) obtains service-specifying information which specifies the payment service.

9. The information processing apparatus according to claim 2, wherein in a case where an application of a different version from the registered application has been installed, the display unit (303) displays an application corresponding to the content indicating the list information as the support information for the application of the different version.

10. The information processing apparatus according to claim 2, wherein in a case where the registered application is a native application, the obtaining unit (302) obtains the content indicating the list information after the unregistered application is installed.

11. The information processing apparatus according to claim 2, wherein in a case where the unregistered application is a web application which is not required to be installed, the obtaining unit (302) obtains the content indicating the list information without the installation.

12. An information processing system comprising:
an information processing apparatus (101) according to any one of claims 2 to 11; and
a server which provides at least one of a plurality of services via a network.

13. An information processing method comprising:
obtaining list information of an application for which a user has registered; and
displaying a content indicating the list information as support information for supporting user registration of a new application for which the user has not registered.

14. A program for causing a computer to execute each step of the information processing method according to claim 13.
